# EUROPEAN PATENT SPECIFICATION

(11) **EP 2 394 892 B1**
(45) Date of publication and mention of the grant of the patent: **02.12.2015**
(21) Application number: 11167012.1
(22) Date of filing: 23.05.2011
(51) Int. Cl.: B62J 17/00, B62J 17/06

(54) **Saddle-ride type vehicle**
Sattelfahrzeug
Véhicule de type à selle

(30) Priority: 11.06.2010 JP 2010134329; 29.09.2010 JP 2010218474
(43) Date of publication of application: 14.12.2011
(73) Proprietor: Yamaha Hatsudoki Kabushiki Kaisha, Shizuoka-ken Shizuoka 438-8501 (JP)
(72) Inventor: Suita, Yoshikazu, Iwata-shi Shizuoka 438-8501 (JP); Kamimura, Kaoru, Iwata-shi Shizuoka 438-8501 (JP)
(74) Representative: Grünecker Patent- und Rechtsanwälte PartG mbB

(56) References cited:
- WO-A2-2006/035920
- JP-U- S4 942 641

## Description

### Field of the Invention

The present invention relates to a saddle-ride type vehicle.

### Background Art

The well-known saddle-ride type vehicles have the structure that a vehicle body cover is disposed forwards of a seat, as seen in the vehicle body cover structure of the motorcycle described in Japan Laid-open Patent Application Publication No. JP-A-2004-291700. Further, an engine is disposed under the vehicle body cover. Yet further, the vehicle body cover includes a plurality of openings in the transverse (width-directional) center portion thereof, and the openings are aligned in the longitudinal (back-and-forth) direction of the vehicle.

The engine is disposed under the vehicle body cover of the aforementioned motorcycle. Therefore, the air warmed by the heat of the engine flows out of the openings of the vehicle body cover. The inner space enclosed by the vehicle body cover is thereby ventilated. However, the heated air is accumulated above the openings and inwards of the top surface of the vehicle body cover. Temperature is accordingly elevated in the inner space enclosed by the vehicle body cover. Therefore, it has been demanded to enhance a ventilation performance within the inner space enclosed by the vehicle body cover for inhibiting temperature elevation in the inner space. In view of the above, it is an object of the present invention to enhance the ventilation performance within the inner space enclosed by the vehicle body cover.

WO 2006/035920 A2 discloses a saddle-ride type vehicle according to the preamble of claim 1. Such a vehicle comprises a vehicle body cover including a center cover and a pair of left and right main pipe side covers disposed in front of a seat for at least partially covering a top side of a frame unit, which is disposed over a drive unit. Openings are formed between the rear portions of each of the left and right main pipe side covers and the lower front portions on both sides of the center cover, wherein each opening is provided with louvers for sucking cold wind toward the drive unit.

### SUMMARY OF THE INVENTION

The object of the present invention is achieved by a saddle-ride type vehicle according to claim 1. A saddle-ride type vehicle according to a first aspect of the present invention is described in independent claim 1.

A saddle-ride type vehicle according to a second aspect of the present invention relates to the saddle-ride type vehicle according to the first aspect of the present invention. In the saddle-ride type vehicle, the top surface section includes a protruded portion. The protruded portion is protruded upwards therefrom for covering the opening from behind.

A saddle-ride type vehicle according to a third aspect of the present invention relates to the saddle-ride type vehicle according to the second aspect of the present invention. In the saddle-ride type vehicle, the protruded portion is slanted for positioning a top portion thereof forwards of a bottom portion thereof.

A saddle-ride type vehicle according to a fourth aspect of the present invention relates to the saddle-ride type vehicle according to the first aspect of the present invention. In the saddle-ride type vehicle, the top surface section further includes a slanted surface. The slanted surface is aligned with either the first blade or the second blade in the longitudinal direction of the vehicle. The slanted surface is slanted with respect to the longitudinal direction of the vehicle for positioning a transversely outward end thereof forwards of a transversely inward end thereof.

A saddle-ride type vehicle according to a fifth aspect of the present invention relates to the saddle-ride type vehicle according to the first aspect of the present invention. In the saddle-ride type vehicle, the vehicle body cover includes an aperture in a portion thereof positioned forwards of the opening. The aperture is opened in a forward direction of the vehicle body. The aperture communicates with the inner space enclosed by the vehicle body cover.

A saddle-ride type vehicle according to a sixth aspect of the present invention relates to the saddle-ride type vehicle according to the fifth aspect of the present invention. In the saddle-ride type vehicle, the vehicle body cover has a maximum transverse dimension in a position rearward of the aperture. The lateral surface section includes a slanted portion positioned rearwards of the position in which the vehicle body cover has the maximum transverse dimension. The slanted portion is slanted for positioning a rear portion thereof to be closer to a transverse center than a front portion thereof to be.

A saddle-ride type vehicle according to a seventh aspect of the present invention relates to the saddle-ride type vehicle according to the first aspect of the present invention. In the saddle-ride type vehicle, either the first blade or the second blade is hollowed out for producing a space communicating with the inner space enclosed by the vehicle body cover.

A saddle-ride type vehicle according to an eighth aspect of the present invention relates to the saddle-ride type vehicle according to the first aspect of the present invention. The saddle-ride type vehicle further includes a radiator. The radiator is disposed inwards of the vehicle body cover. The radiator is configured to execute heat exchange between an outside air and a refrigerant for cooling the drive unit.

### <Advantageous Effects of Invention>

According to the saddle-ride type vehicle of the first aspect of the present invention, airflow is generated along the first blade on the outward of the vehicle body cover. The air flowing outward of the vehicle body cover then flows towards the opening while being guided by the first blade. Similarly, the air flowing outward of the vehicle body cover flows towards the opening while being guided by the second blade. Accordingly, the amount of the air flowing above the opening is increased. When airflow is generated above the opening, pressure in the space positioned above the opening will be lower than that in the inner space enclosed by the vehicle body cover. Accordingly, the heated air in the inner space enclosed by the vehicle body cover can be easily discharged to the outward from the opening. Consequently, a ventilation performance can be enhanced in the inner space enclosed by the vehicle body cover in the saddle-ride type vehicle.

According to the saddle-ride type vehicle of the second aspect of the present invention, the protruded portion covers the opening from behind. Accordingly, the air flowing out of the opening is prevented from easily flowing rearwards. Therefore, it is possible to inhibit rider's comfortableness from being deteriorated by the warmed air flowing out of the opening of the top surface section of the vehicle body cover.

According to the saddle-ride type vehicle of the third aspect of the present invention, the protruded portion is slanted for positioning the top portion thereof forwards of the lower portion thereof. Accordingly, the air flowing out of the opening is guided obliquely forwards and upwards from the opening while flowing along the protruded portion. The air flowing out of the opening is thereby diffused without flowing rearwards as it is. Therefore, it is possible to inhibit rider's comfortableness from being deteriorated by the warmed air flowing out of the opening of the top surface section of the vehicle body cover.

According to the saddle-ride type vehicle of the fourth aspect of the present invention, the slanted surface in the top surface section is disposed to be slanted for positioning the transversely outward end thereof forwards of the transversely inward end thereof. Accordingly, the air in the inner space enclosed by the vehicle body cover is directed towards the opening while being guided by the slanted surface. Therefore, the air in the inner space enclosed by the vehicle body cover can be further easily discharged to the outward from the opening.

According to the saddle-ride type vehicle of the fifth aspect of the present invention, the outside air is inhaled into the inner space enclosed by the vehicle body cover from the front side of the vehicle body cover through the aperture. Therefore, the heated air in the inner space enclosed by the vehicle body cover can be further easily discharged to the outward from the opening. In other words, a ventilation performance can be further enhanced in the inner space enclosed by the vehicle body cover.

According to the saddle-ride type vehicle of the sixth aspect of the present invention, the lateral surface section of the vehicle body cover includes the slanted portion positioned rearwards of the position in which the vehicle body cover has the maximum transverse dimension, and the slanted portion is slanted for positioning a rear portion thereof to be closer to the transverse center than a front portion thereof to be. Accordingly, the air in the inner space enclosed by the vehicle body cover is guided towards the opening while flowing along the inner surface of the lateral surface section. Therefore, the air in the inner space enclosed by the vehicle body cover can be further easily discharged to the outward from the opening.

According to the saddle-ride type vehicle of the seventh aspect of the present invention, either the first blade or the second blade is hollowed out for producing the space communicating with the inner space enclosed by the vehicle body cover. Further, the first and second blades are slanted for positioning the transversely outward end thereof forwards of the transversely inward end thereof. Therefore, the air in the inner space enclosed by the vehicle body cover is guided towards the opening while flowing through the space produced by either the first blade or the second blade. In other words, the air in the inner space enclosed by the vehicle body cover is guided towards the opening while flowing along the inner surface of either the first blade or the second blade. Therefore, the air in the inner space enclosed by the vehicle body cover can be easily discharged to the outward from the opening.

According to the saddle-ride type vehicle of the eighth aspect of the present invention, the radiator is disposed inwards of the vehicle body cover. Therefore, a ventilation performance can be enhanced in the inner space enclosed by the vehicle body cover. In other words, a cooling performance can be enhanced for the radiator.

### BRIEF DESCRIPTION OF THE DRAWINGS

Referring now to the attached drawings which form a portion of this original disclosure:
FIG. 1 is a side view of a saddle-ride type vehicle according to an exemplary embodiment of the present invention;
FIG. 2 is a front view of the saddle-ride type vehicle;
FIG. 3 is a top view of the saddle-ride type vehicle;
FIG. 4 is a perspective view of a vehicle body cover of the saddle-ride type vehicle;
FIG. 5 is an enlarged view of a top surface section of the vehicle body cover;
FIG. 6 is a schematic cross-sectional view of the top surface section of the vehicle body cover sectioned along a line VI-VI in FIG. 5;
FIG. 7 is a schematic cross-sectional view of the top surface section of the vehicle body cover sectioned along a line VII-VII in FIG. 5; and
FIG. 8 is a schematic cross-sectional view of the top surface section of the vehicle body cover sectioned along a line VIII-VIII in FIG. 5.

### DETAILED DESCRIPTION OF THE EMBODIMENTS

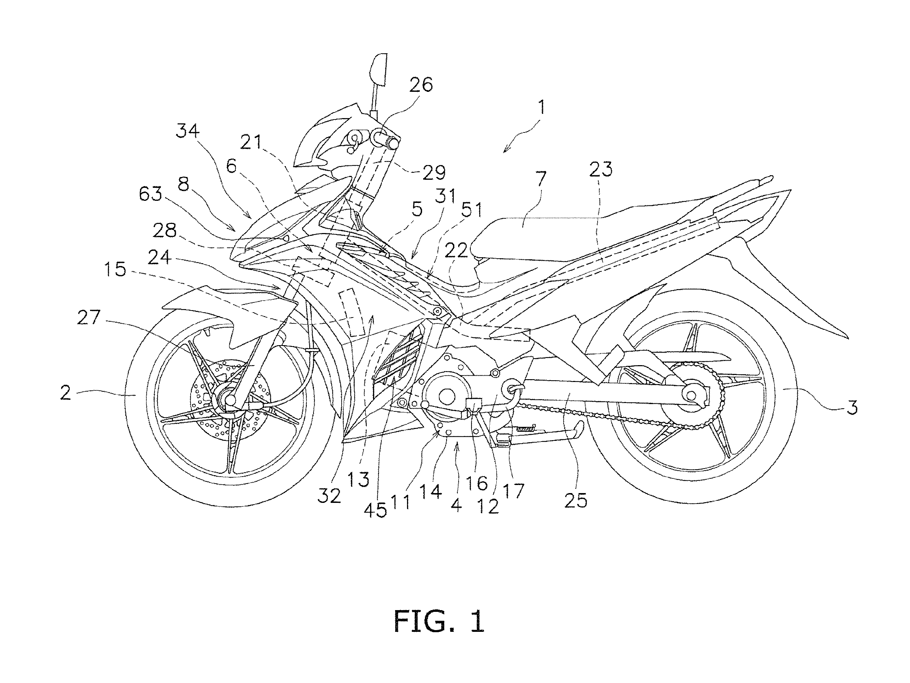

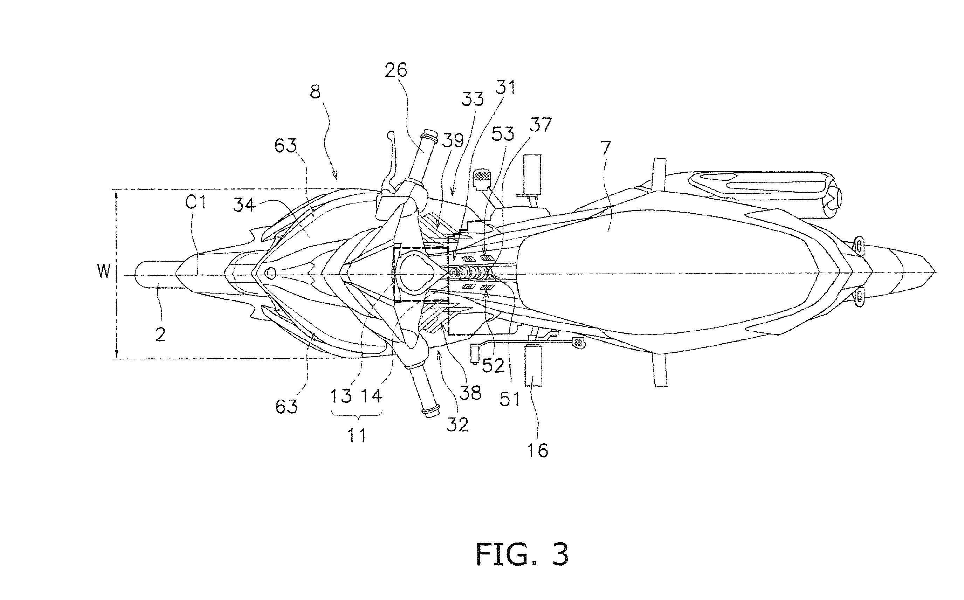

An exemplary embodiment of the present invention will be hereinafter explained with reference to figures. FIG. 1 is a side view of a saddle-ride type vehicle 1 according to the exemplary embodiment of the present invention. FIG. 3 is a top view of the saddle-ride type vehicle 1. The saddle-ride type vehicle 1 is so called a moped. In the saddle-ride type vehicle 1, a downwardly recessed shape is produced for a section interposed between a seat 7 to be described and a steering section 6 to be described in a longitudinal (back-and-forth) direction of a vehicle body. It should be noted that directional terms such as "front", "rear", "right" and "left" and their related terms refer to directions seen from a rider seated on the seat 7 of the saddle-ride type vehicle 1 in the following explanation unless otherwise specified. Further, the term "lateral" and its related terms refer to a direction separated away from the vehicle body center in a transverse (width/right-and-left) direction of the vehicle. As illustrated in FIG. 1, the saddle-ride type vehicle 1 includes a front wheel 2, a rear wheel 3, a drive unit 4, a vehicle body frame 5, the steering unit 6, the seat 7, a vehicle body cover 8 and the like.

The drive unit 4 is longitudinally disposed between the front wheel 2 and the rear wheel 3 while being supported by the vehicle body frame 5. The drive unit 4 includes an engine 11 and a transmission 12. The engine 11 is a water cooled engine. The engine 11 includes a cylinder unit 13 and a crankcase 14. The cylinder unit 13 is disposed on the front side of the crankcase 14. The cylinder unit 13 is disposed at a slanted posture with respect to the longitudinal direction for positioning the front portion thereof higher than the rear portion thereof. The transmission 12 is disposed behind the crankcase 14. The transmission 12 is configured to decelerate the drive force from the engine 11 and transmit the decelerated drive force to the rear wheel 3 through a chain. Further, a radiator 15 is disposed forwards of the cylinder unit 13. The radiator 15 is disposed inwards of the vehicle body cover 8. The radiator 15 is configured to conduct heat exchange between a refrigerant and the outside air for cooling the engine 11. The radiator 15 is positioned lower than a main frame 22. Steps 16 and a change pedal 17 are disposed lateral to the transmission 12. A rider puts his/her feet on the steps 16 and shifts up/down gears of the transmission 12 by operating the change pedal 17 with his/her foot.

The vehicle body frame 5 includes a head pipe 21, the main frame 22 and the rear frame 23. The head pipe 21 supports a front fork 24 to be described for allowing it to rotate. The main frame 22 corresponds to "a frame unit" of the present invention. The main frame 22 is connected to the head pipe 21 while being extended therefrom obliquely rearwards and downwards. The main frame 22 is disposed over the drive unit 4. A rear arm 25 is attached to the rear portion of the main frame 22 through a bracket (not illustrated in the figure) while being pivotable in the vertical (up-and-down) direction. The rear arm 25 supports the rear wheel 3 for allowing it to rotate. The rear frame 23 is connected to the main frame 22 while being extended therefrom obliquely rearwards and upwards. The rear frame 23 is disposed over the rear wheel 3. The seat 7 is disposed over the rear frame 23 while being supported by the rear frame 23.

The steering unit 6 includes the front fork 24 and a handle 26. The front fork 24 supports the front wheel 2 for allowing it to rotate. Specifically, the front fork 24 includes a pair of front suspensions 27, a bracket 28 and a steering shaft 29. The front suspensions 27 are disposed away from each other in the transverse direction of the vehicle. The front suspensions 27 support the front wheel 2 for allowing it to rotate. The tops of the front suspensions 27 are attached to the bracket 28. The bracket 28 is attached to the bottom of the steering shaft 29. The steering shaft 29 is rotatably inserted into the head pipe 21. The handle 26 is coupled to the top of the steering shaft 29. In other words, the handle 26 is coupled to the top of the front fork 24.

The seat 7 is disposed over the rear frame 23. The seat 7 is disposed rearwards of the steering unit 6 while being separated away from the steering unit 6.

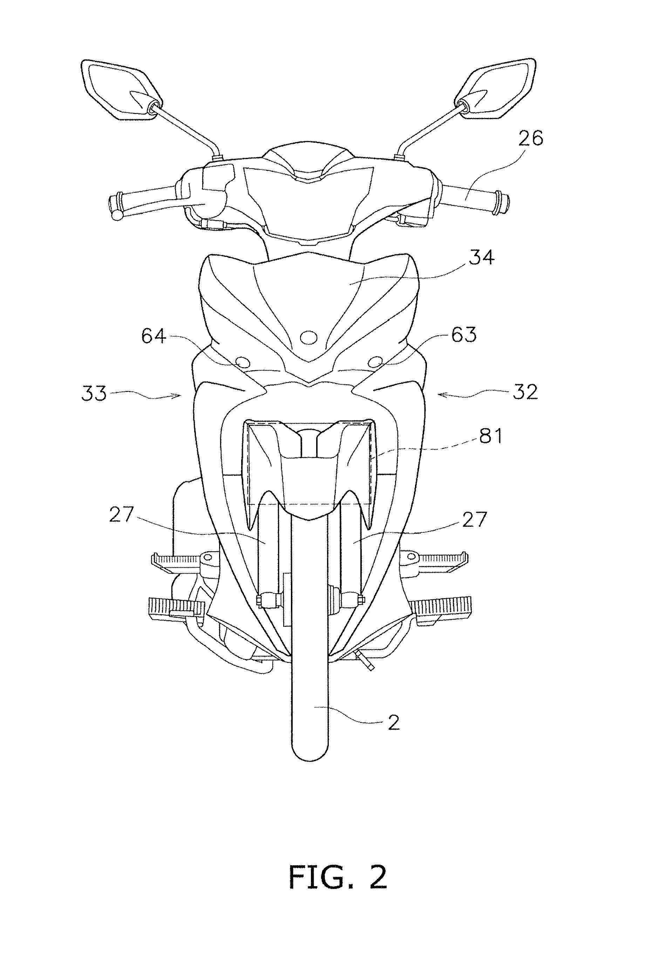

The vehicle body cover 8 is a resin member covering the vehicle body frame 5. The vehicle body cover 8 includes a top surface section 31, a pair of a lateral surface section 32 and a lateral surface section 33 (see FIGS. 2 and 3) and a front surface section 34.

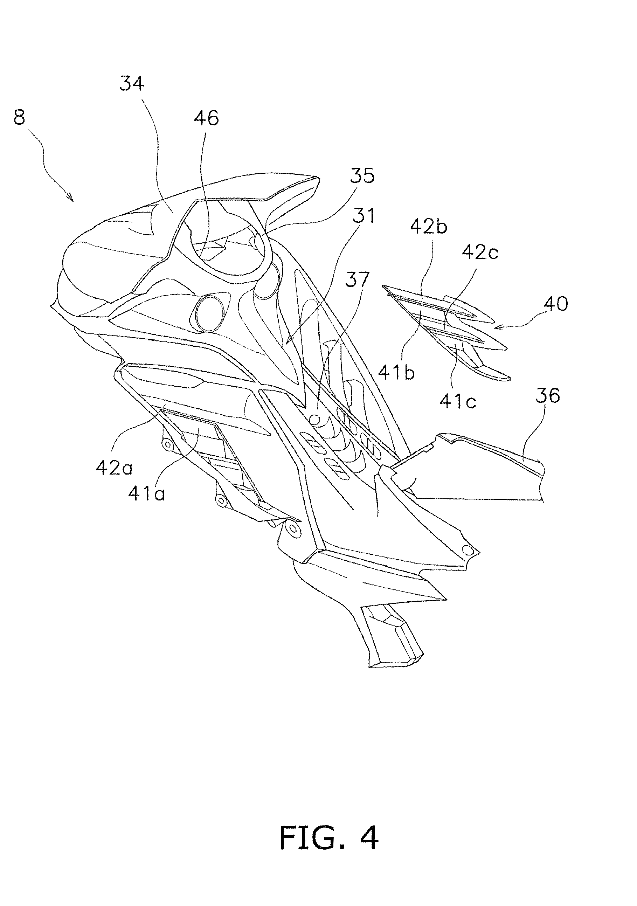

The top surface section 31 is longitudinally disposed between the steering unit 6 and the seat 7 for covering the top side of the main frame 22. The top surface section 31 is longitudinally disposed between the head pipe 21 and the seat 7 while being extended to a position below the front end of the seat 7. The top surface section 31 is positioned lower than the top surface of the seat 7. The top surface section 31 is positioned higher than the engine 11. The surface of the top surface section 31 is slanted with respect to the longitudinal direction for positioning the front portion thereof higher than the rear portion thereof. FIG. 4 illustrates a perspective view of the vehicle body cover 8. It should be noted that FIG. 4 illustrates the vehicle body cover 8 that some components are detached therefrom. As illustrated in FIG. 4, the top surface section 31 includes a front protruded portion 35 on the front portion thereof. The front protruded portion 35 is positioned in the center of the top surface section 31 in the transverse direction of the vehicle. The front protruded portion 35 includes an opening 46 for inserting the aforementioned steering shaft 29 therein. The top surface section 31 includes a rear bent portion 36 on the rear portion thereof. The rear bent portion 36 is upwardly bent. The rear bent portion 36 is disposed under the front portion of the seat 7. A top surface center portion 37 is longitudinally disposed between the front protruded portion 35 and the rear bent portion 36.

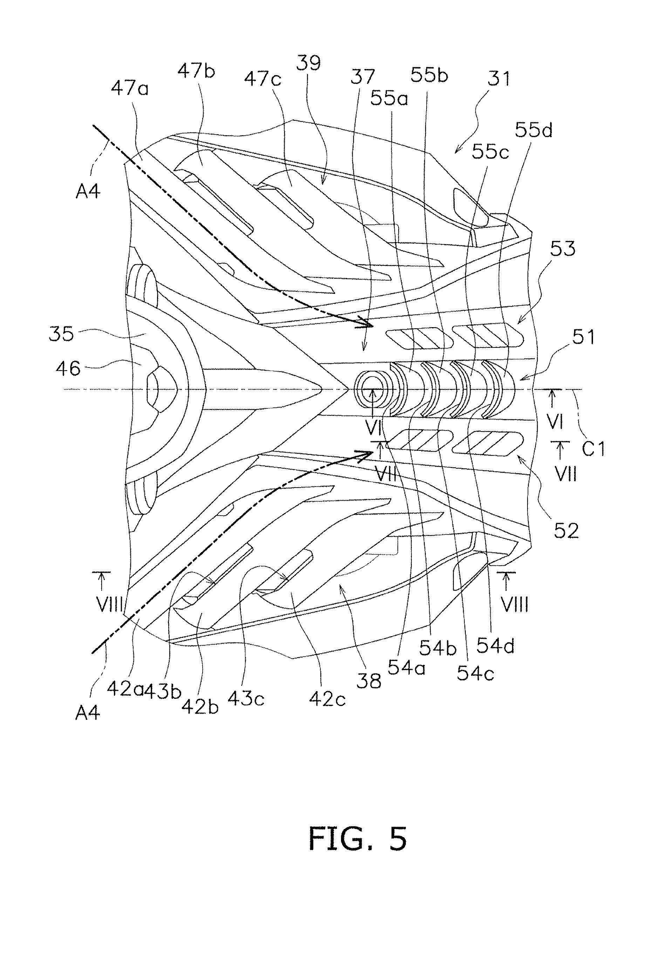

The top surface center portion 37 is disposed in the center of the top surface section 31 in the transverse direction of the vehicle. The top surface center portion 37 is longitudinally extended while being connected to both the front protruded portion 35 and the rear bent portion 36. The aforementioned main frame 22 is disposed under the top surface center portion 37. FIG. 5 illustrates an enlarged partial top view of the top surface section 31. In the top view of the top surface section 31, the top surface center portion 37 is transversely disposed between first blades 42a to 42c to be described and second blades 47a to 47c to be described. The top surface center portion 37 includes a first opening portion 51, a second opening portion 52 and a third opening portion 53. The first, second and third opening portions 51, 52 and 53 are disposed forwards of the seat 7.

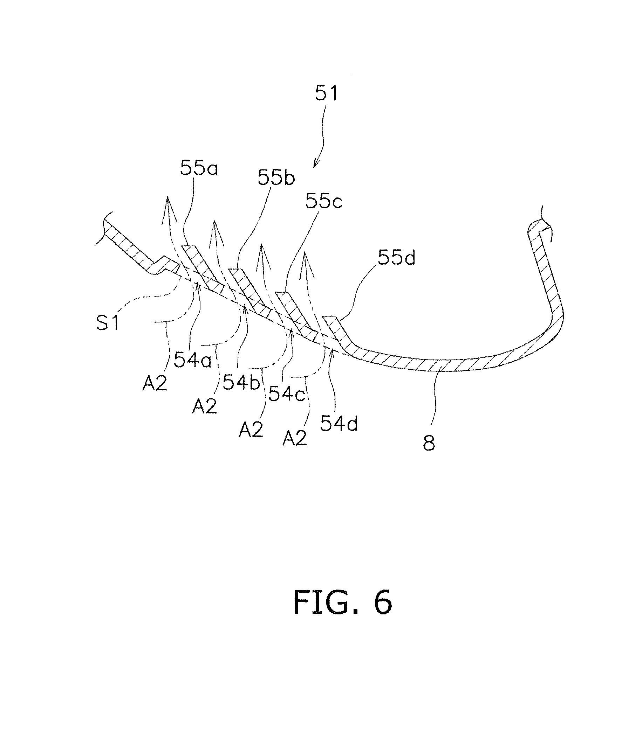

The first opening portion 51 is positioned in the transverse center of the top surface center portion 37. The first opening portion 51 is transversely positioned between the second opening portion 52 and the third opening portion 53. The first opening portion 51 is positioned on the bottom of a longitudinally extended groove-like portion disposed in the transverse center of the top surface center portion 37. Therefore, the first opening portion 51 is positioned lower than the second and third opening portions 52 and 53. At least a portion of the openings of the first, second and third opening portions 51, 52 and 53 is overlapped with the engine 11 in a plan view (see FIG. 3). In other words, at least a portion of the openings of the first, second and third opening portions 51, 52 and 53 is positioned over the engine 11. As illustrated in FIG. 6, the first opening portion 51 includes a plurality of first top surface openings 54a to 54d and a plurality of top surface protrusions 55a to 55d. The plural first top surface openings 54a to 54d are aligned in the longitudinal direction. In the present exemplary embodiment, four first top surface openings 54a to 54d are provided. The first top surface openings 54a to 54d communicate with the inward of the vehicle body cover 8. It should be noted that the term "inward (or inside) of the vehicle body cover 8" refers to the inner space enclosed by the top surface section 31, a pair of the lateral surface sections 32 and 33, and the front surface section 34 in the specification of the present application. The first top surface openings 54a to 54d are positioned rearwards of the front ends of the first blades 42a to 42c to be described and the front ends of the second blades 47a to 47c to be described. Each of the plural top surface protrusions 55a to 55d is disposed rearwards of a corresponding one of the first top surface openings 54a to 54d. In other words, each of the top surface protrusions 55a to 55d forms a rear end portion of a corresponding one of the first top surface openings 54a to 54d. Each of the top surface protrusions 55a to 55d covers a corresponding one of the first top surface openings 54a to 54d from the rear side. In the present exemplary embodiment, four top surface protrusions 55a to 55d are provided. The top surface protrusions 55a to 55d are aligned in the longitudinal direction. The top surface protrusions 55a to 55d are protruded upwards from the top surface section 31. In other words, the top surface protrusions 55a to 55d are protruded upwards from the surface of the top surface center portion 37 (see a dashed line S1). Each of the top surface protrusions 55a to 55d is slanted with respect to the vertical direction for positioning the top portion thereof forwards of the bottom portion thereof. As to the top surface protrusions 55a to 55d, a given one of positioned higher than the other/others disposed rearwards of the given one. Specifically, the top end of a given one of the top surface protrusions 55a to 55c is positioned higher than that of a corresponding one, which is adjacently disposed rearwards of the given one, of the top surface protrusions 55b to 55d. However, the bottom end of a given one of the top surface protrusions 55a to 55c is vertically overlapped with a corresponding one, which is adjacently disposed rearwards of the given one, of the top surface protrusions 55b to 55d. Further, the top ends of the top surface protrusions 55a to 55d are positioned lower than the surfaces of the second and third opening portions 52 and 53. As illustrated in FIG. 5, each of the top surface protrusions 55a to 55d is curved in a circular arc shape for covering a corresponding one of the first top surface openings 54a to 54d from the rear side.

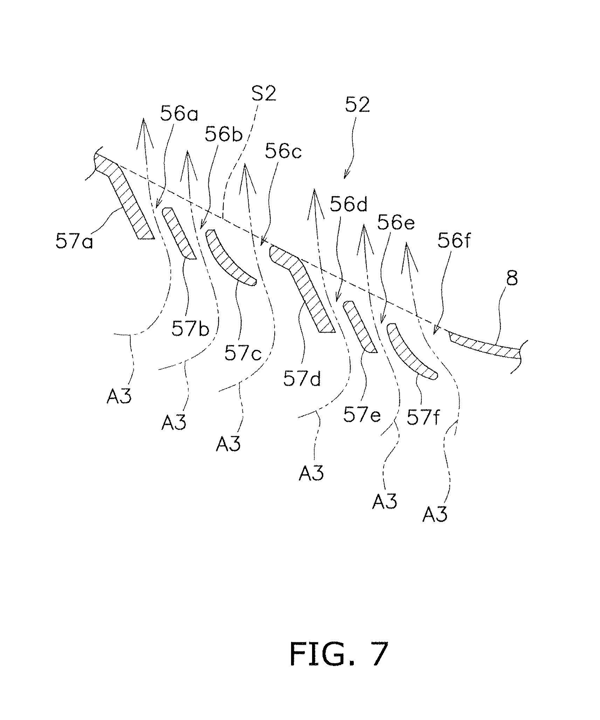

The second opening portion 52 is positioned on the left side of the first opening portion 51. As illustrated in FIG. 7, the second opening portion 52 includes a plurality of second top surface openings 56a to 56f and a plurality of guides 57a to 57f. The plural second top surface openings 56a to 56f are aligned in the longitudinal direction. In the present exemplary embodiment, six second top surface openings 56a to 56f are provided. The second top surface openings 56a to 56f communicate with the inward of the vehicle body cover 8. The transverse dimensions of the second top surface openings 56a to 56f are less than those of the aforementioned first top surface openings 54a to 54d. Each of the plural guides 57a to 57f is disposed forwards of a corresponding one of the second top surface openings 56a to 56f. In the present exemplary embodiment, six guides 57a to 57f are provided. The guides 57a to 57f are aligned in the longitudinal direction. Each of the guides 57a to 57f is slanted with respect to the vertical direction for positioning the top portion thereof forwards of the bottom portion thereof. As to the guides 57a to 57f, a given one is positioned higher than the other/others disposed rearwards of the given one. Specifically, the top end of a given one of the guides 57a to 57e is positioned higher than that of a corresponding one, which is adjacently disposed rearward of the given one, of the guides 57b to 57f. However, the bottom end of a given one of the guides 57a to 57e is vertically overlapped with a corresponding one, which is adjacently disposed rearward of the given one, of the guides 57b to 57f. The vertical positions of the guides 57a to 57f are equal to or lower than the vertical position of the top surface section 31. In other words, the vertical positions of the guides 57a to 57f are equal to or lower than the vertical position of the surface of the top surface center portion 37 (see a dashed line S2). It should be noted that the third opening portion 53 has the same structure as the second opening portion 52 and is disposed bilaterally symmetric to the second opening portion 52.

In the top surface section 31, a left top surface portion 38 and a right top surface portion 39 are disposed on the both lateral sides of the top surface center portion 37, as illustrated in FIG. 5. The left top surface portion 38 and the right top surface portion 39 are separated from each other in the transverse direction of the vehicle. The structure of the left top surface portion 38 is bilaterally symmetrical to that of the right top surface portion 39. In the top view, the top surface center portion 37 is transversely disposed between the left top surface portion 38 and the right top surface portion 39. The structure of the left top surface portion 38 will be hereinafter explained.

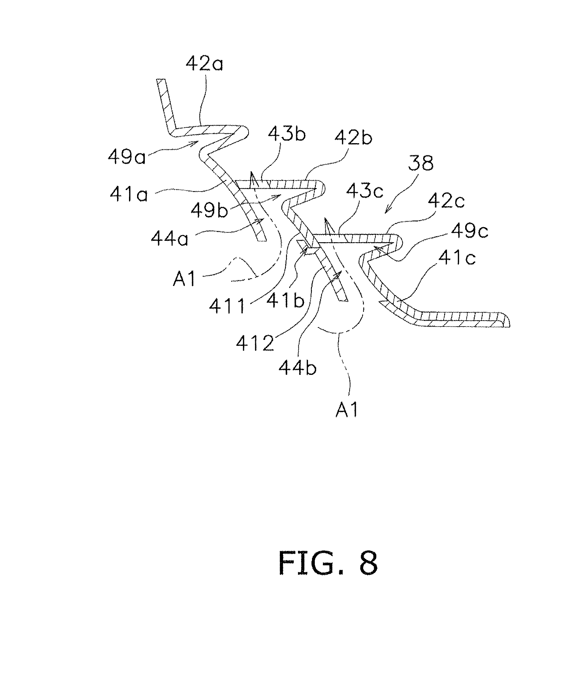

FIG. 8 illustrates a schematic cross-sectional view of the left top surface portion 38. The left top surface portion 38 includes a plurality of slanted surfaces 41a to 41c and a plurality of first blades 42a to 42c.

The slanted surfaces 41a to 41c, together with the plural first blades 42a to 42c, are aligned in the longitudinal direction. The slanted surfaces 41a to 41c are alternately disposed with the plural first blades 42a to 42c. The slanted surfaces 41a to 41c are slanted in the same direction as the surface of the top surface section 31. In other words, each of the slanted surfaces 41a to 41c is slanted with respect to the longitudinal direction for positioning the front portion thereof higher than the rear portion thereof. The slanted surfaces 41a to 41c are disposed away from each other in the longitudinal direction. Two pairs of adjacent slanted surfaces among the slanted surfaces 41a to 41c form air paths 44a and 44b communicating with the inside of the vehicle body cover 8. Specifically, the air path 44a is formed by the slanted surfaces 41a and 41b. Further, the air path 44b is formed by the slanted surfaces 41b and 41c. As to the slanted surfaces 41a to 41c, a given one is positioned higher than the other/others disposed rearwards of the given one. The bottom end of each slanted surface is disposed for vertically overlapping with the slanted surface backwardly adjacent thereto. Specifically, the bottom end of the forefront slanted surface 41a is disposed for vertically overlapping with the slanted surface 41b positioned rearwards thereof. Further, the bottom end of the slanted surface 41b is disposed for vertically overlapping with the slanted surface 41c positioned rearwards thereof. Each of the slanted surfaces 41a to 41c is integrally formed with a corresponding one of the first blades 42a to 42c. Similarly to the first blades 42a to 42c, the slanted surfaces 41a to 41c are slanted with respect to the transverse direction of the vehicle. In other words, each of the slanted surfaces 41a to 41c is slanted with respect to the longitudinal direction for positioning the transversely outward end thereof forwards of the transversely inward end thereof. It should be noted that the term "transversely inward" refers to a direction closer to the vehicle center in the transverse direction of the vehicle (see a dashed dotted line C1), whereas the term "transversely outward" refers to a direction away from the vehicle center in the transverse direction of the vehicle.

Each of the first blades 42a to 42c is protruded from a corresponding one of the slanted surfaces 41a to 41c. Each of the first blades 42a to 42c is connected to the top end of a corresponding one of the slanted surfaces 41a to 41c while being protruded therefrom to the rearward. In other words, the first blades 42a to 42c are disposed for blocking the air flowing along the slanted surfaces 41a to 41c through the air paths 44a and 44b (see arrows A1 depicted with dashed two-dotted lines). Each of the first blades 42a to 42c is bent and hollowed out for producing a corresponding one of spaces 49a to 49c communicating with the inward of the vehicle body cover 8. As to the first blades 42a to 42c, a given one is positioned higher than the other/others disposed rearwards of the given one. Further, the first blades 42a to 42c are transversely slanted with respect to the longitudinal direction, as illustrated in FIG. 5. Specifically, each of the first blades 42a to 42c is slanted with respect to the longitudinal direction for positioning the transversely outward end thereof (hereinafter referred to as "outward end") forwards of the transversely inward end thereof (hereinafter referred to as "inward end"). Therefore, the inward ends of the first blades 42a to 42c are disposed closer to the first top surface openings 54a to 54d than the outward ends thereof are. Further, the first blades 42a to 42c are vertically slanted with respect to the longitudinal direction. Specifically, each of the first blades 42a to 42c is slanted with respect to the longitudinal direction for positioning the outward end thereof higher than the inward end thereof. As to the first blades 42a to 42c, a given one has a transverse dimension greater than that of the other/others disposed rearwards of the given one. Further, the first blades 42a to 42c are partially recessed. Specifically, the rear side blades of the first blades 42a to 42c, i.e., the first blades 42b and 42c have recesses 43b and 43c on the front ends thereof, as illustrated in FIGS. 5 and 8. The air path 44a communicates with the outer space through the recess 43b, whereas the air path 44b communicates with the outer space through the recess 43c.

As illustrated in FIG. 4, a portion of the first blades 42a to 42c and a portion of the slanted surfaces 41a to 41c are produced as individual components separated from the remaining portion of the top surface section 31 (hereinafter referred to as "the main body of the top surface section 31"). Specifically, a grill component 40, including the rear side first blades 42b and 42c, a portion of the slanted surface 41b, and the slanted surface 41c, is provided as an individual component separated from the main body of the top surface section 31. In other words, the grill component 40 is produced as an individual component separated from the main body of the top surface section 31 and includes a portion of the plural first blades 42a to 42c and the plural slanted surfaces 41a to 41c. The grill component 40 is attached to the main body of the top surface section 31 while being disposed over the main body of the top surface section 31. Specifically, the grill component 40 includes the first blades 42b and 42c provided with the aforementioned recesses 43b and 43c. It should be noted that the slanted surface 41b is formed by a top portion 411 included in the grill component 40 and a bottom portion 412 included in the main body of the top surface section 31, as illustrated in FIG. 8. The grill component 40 is fixed to the main body of the top surface section 31 by fixation means such as screws or a fitting structure.

As described above, the structure of the right top surface portion 39 is bilaterally symmetric to that of the left top surface portion 38. The right top surface portion 39 includes a plurality of slanted surfaces (not illustrated in the figures) and the plural second blades 47a to 47c. The slanted surfaces of the right top surface portion 39 are disposed bilaterally symmetric to the slanted surfaces 41a to 41c of the left top surface portion 38. Further, the second blades 47a to 47c are disposed bilaterally symmetric to the first blades 42a to 42c. The second blades 47a to 47c are disposed away from the first blades 42a to 42c in the transverse direction of the vehicle. The aforementioned first top surface openings 54a to 54d of the first opening portion 51 are transversely disposed between the first blades 42a to 42c and the second blades 47a to 47c. Similarly to the first blades 42a to 42c, the second blades 47a to 47c are slanted with respect to the longitudinal direction. In other words, each of the second blades 47a to 47c is slanted with respect to the longitudinal direction for positioning the outward end thereof forwards of the inward end thereof. Therefore, the inward ends of the second blades 47a to 47c are disposed closer to the first top surface openings 54a to 54d than the outward ends thereof are. Further, each of the second blades 47a to 47c is slanted with respect to the longitudinal direction for positioning the outward end thereof higher than the inward end thereof.

As illustrated in FIG. 1, a pair of the lateral surface sections 32 and 33 (hereinafter referred to as "a right lateral surface section 33" and "a left lateral surface section 32") at least partially covers the lateral sides of the drive unit 4. Specifically, the left lateral surface section 32 covers the left sides of the cylinder unit 13 of the engine 11, the steering unit 6, the radiator 15 and the like. The right lateral surface section 33 (see FIG. 3) covers the right sides of the cylinder unit 13 of the engine 11, the steering unit 6, the radiator 15 and the like. It should be noted that the right lateral surface section 33 is disposed bilaterally symmetric to the left lateral surface section 32 and has a structure roughly the same as that of the left lateral surface section 32. The top portion of the left lateral surface section 32 is connected to both the top surface section 31 and the front surface section 34. The bottom of the left lateral surface section 32 is positioned at roughly the same height as that of the engine 11. The rear end of the left lateral surface section 32 is positioned rearwards of the front end of the engine 11 while being positioned forwards of the rear end of the engine 11. In the side view, the front end of the left lateral surface section 32 is recessed rearwards and curved along the shape of the front wheel 2. Further, the left lateral surface section 32 includes an opening 45. In the side view of the vehicle body, the opening 45 communicates with the inside of the vehicle body cover 8 while being positioned lower than the aforementioned air paths 44a and 44b. The cylinder unit 13 of the engine 11 is positioned inwards of the opening 45.

The front surface section 34 covers the front side of the head pipe 21. As illustrated in FIG. 2, the front surface section 34 includes a pair of apertures 63 and 64. The apertures 63 and 64 are disposed bilaterally symmetric to each other, while being separated away from each other in the transverse direction. It should be noted that FIG. 1 illustrates only the left aperture 63 of a pair of the right and left apertures 64 and 63. The apertures 63 and 64 are disposed in the vehicle body cover 8 while being positioned forwards of the top surface openings 54a to 54d. The apertures 63 and 64 are respectively disposed closer to the tops of the right and left lateral surface sections 33 and 32. The apertures 63 and 64 are opened to the forward of the vehicle body, while communicating with the inward of the vehicle body cover 8. It should be noted that the aforementioned radiator 15 is positioned rearwards of the apertures 63 and 64 in the inward of the vehicle body cover 8 while being positioned lower than the apertures 63 and 64, as illustrated in FIG.
1. The radiator 15 is at least partially positioned between the top surface section 31 and the engine 11 in the vertical direction. Further, the top end of the radiator 15 is positioned higher than the bottom ends of the right and left top surface portions 39 and 38. The radiator 15 is at least partially positioned for overlapping with the right and left top surface portions 39 and 38 in the vertical direction. Further, the vehicle body cover 8 includes an opening 81 in a portion thereof positioned forwards of the radiator 15, as illustrated in FIG. 2. The opening 81 is positioned rearwards of the front wheel 2.

Further, the transverse dimension of the vehicle body cover 8 is maximized in a position rearwards of the apertures 63 and 64 (hereinafter referred to as "a maximum transverse width position", see "W" in FIG. 3), as illustrated in FIG. 3. In the top view, the maximum transverse width position is positioned forwards of the aforementioned right and left top surface portions 39 and 38. A portion in each of the aforementioned right and left lateral surface sections 33 and 32, positioned forwards of the maximum transverse width position, is slanted with respect to the longitudinal direction for positioning the rear portion thereof to be further separated away from the vehicle transverse center (see the dashed dotted line C1 in FIGS. 2 and 4) than the front portion thereof to be. Further, a portion in each of the lateral surface sections 32 and 33, positioned rearwards of the maximum vehicle width position, is slanted with respect to the longitudinal direction for positioning the rear portion thereof to be closer to the vehicle transverse center than the front portion thereof to be.

The saddle-ride type vehicle 1 of the present exemplary embodiment of the present invention has the following features.

While the saddle-ride type vehicle 1 travels, front-to-rear airflow is generated in the surrounding of the saddle-ride type vehicle 1. Specifically, air flows from front to rear through the top side of the vehicle body cover 8 of the saddle-ride type vehicle 1. Airflow is generated on the top surface of the vehicle body cover 8 along the first blades 42a to 42c. Accordingly, the air flowing on the lateral side of the vehicle body gathers towards the center of the vehicle while being guided by the first blades 42a to 42c, as represented by one of arrows A4 in FIG. 5. Similarly, the air flowing on the other of the lateral side of the vehicle body gathers towards the center of the vehicle while being guided by the second blades 47a to 47c. Accordingly, the amount of the air flowing along the top surface section 31 of the vehicle body cover 8 is increased. When airflow is generated above the first opening portion 51, pressure of the space positioned above the first opening portion 51 will be lower than that of the space in the inward of the vehicle body cover 8. Accordingly, the warmed air in the inward of the vehicle body cover 8 will be easily discharged to the outside from the first top surface openings 54a to 54d. Further, air will be easily inhaled into the inward of the vehicle body cover 8 from the front side of the vehicle body cover 8 through the apertures 63 and 64 and the opening 81 positioned rearwards of the front wheel 2. Accordingly, a ventilation performance is enhanced in the inward of the vehicle body cover 8 of the saddle-ride type vehicle 1.

In the first opening portion 51, each of the top surface protrusions 55a to 55d covers a corresponding one of the first top surface openings 54a to 54d from the rear side. Accordingly, the air flowing out of the first top surface openings 54a to 54d (see arrows A2 depicted with dashed two-dotted lines in FIG. 6) is prevented from easily flowing rearwards, while the saddle-ride type vehicle 1 travels or stops. Therefore, it is possible to inhibit rider's comfortableness from being deteriorated by the warmed air flowing out of the first top surface openings 54a to 54d.

Each of the top surface protrusions 55a to 55d is slanted for positioning the top portion thereof forwards of the bottom portion thereof. Accordingly, the air flowing out of the first top surface openings 54a to 54d flows along the top surface protrusions 55a to 55d and is guided obliquely forwards and upwards from the first top surface openings 54a to 54d. In other words, the air flowing out of the first top surface openings 54a to 54d is prevented from easily flowing rearwards. Consequently, it is possible to inhibit rider's comfortableness from being deteriorated by the warmed air flowing out of the first top surface openings 54a to 54d. Further, each of the guides 57a to 57f in the second opening portion 52 is slanted for positioning the top portion thereof forwards of the bottom portion thereof. Accordingly, the air flowing out of the second top surface openings 56a to 56f flows along the guides 57a to 57f and is thereby guided obliquely forwards and upwards from the second top surface openings 56a to 56f (see arrows A3 depicted with dashed two-dotted lines in FIG. 7). In other words, the air flowing out of the second top surface openings 56a to 56f is prevented from easily flowing rearwards. Consequently, it is possible to inhibit rider's comfortableness from being deteriorated by the warmed air flowing out of the second top surface openings 56a to 56f. The air flowing out of the third opening portion 53 has features roughly the same as those of the aforementioned air flowing out of the second opening portion 52.

Each of the slanted surfaces 41a to 41c of the left top surface portion 38 is slanted for positioning the transverse outward end thereof forwards of the transverse inward end thereof. Accordingly, the air in the inward of the vehicle body cover 8 is guided by the slanted surfaces 41a to 41c towards the first top surface openings 54a to 54d. Therefore, the air in the inward of the vehicle body cover 8 can be further easily discharged to the outside from the first top surface openings 54a to 54d.

The air in the inward of the vehicle body cover 8 is also guided towards the first top surface openings 54a to 54d by the slanted shapes of the lateral surface sections 32 and 33 of the vehicle body cover 8. In other words, in each of the lateral surface sections 32 and 33, the area positioned rearwards of the maximum transverse width position is slanted for positioning the rear portion thereof to be closer to the transverse center than the front portion thereof to be. Accordingly, the air in the inward of the vehicle body cover 8 flows along the inner surfaces of the lateral surface sections 32 and 33 and is thereby guided towards the first top surface openings 54a to 54d. Consequently, the air in the inward of the vehicle body cover 8 can be further easily discharged to the outside from the first top surface openings 54a to 54d.

The first blades 42a to 42c and the second blades 47a to 47c are hollowed out for producing the spaces 49a to 49c communicating with the inward of the vehicle body cover 8. Further, each of the first blades 42a to 42c and the second blades 47a to 47c is slanted for positioning the transverse outward end thereof forwards of the transverse inward end thereof. Accordingly, the air in the inward of the vehicle body cover 8 is guided towards the vehicle body center in the transverse direction through the spaces 49a to 49c produced by the first blades 42a to 42c and the spaces produced by the second blades 47a to 47c. In other words, the air in the inward of the vehicle body cover 8 is guided towards the first top surface openings 54a to 54d while flowing along the inner surfaces of the first blades 42a to 42c and the inner surfaces of the second blades 47a to 47c. Therefore, the air in the inward of the vehicle body cover 8 can be further easily discharged to the outside from the first top surface openings 54a to 54d.

The radiator 15 is disposed in the inward of the vehicle body cover 8. Therefore, a cooling performance can be enhanced for the radiator 15 by being enhanced a ventilation performance in the inward of the vehicle body cover 8.

An exemplary embodiment of the present invention has been described above. However, the present invention may not be limited to the aforementioned exemplary embodiment and a variety of changes can be made for the present invention without departing from the scope of the present invention as defined in the appended claims. For example, the detailed shape of the vehicle body cover 8 is not limited to the aforementioned shape. The number of the first blades 42a to 42c and the number of the second blades 47a to 47c are not limited to the aforementioned configurations. For example, only a single first blade may be provided. Similarly, only a single second blade may be provided. The number of the slanted surfaces 41a to 41c is not limited to the aforementioned configuration. The number of the top surface protrusions 55a to 55d, the number of the first top surface openings 54a to 54d, the number of the guides 57a to 57f and the number of the second top surface openings 56a to 56f may not be limited to the aforementioned configurations. The positions of the apertures 63 and 64 may not be limited to the aforementioned configurations as long as they are disposed in the vehicle body cover 8 while being positioned forwards of the air paths 44a and 44b. In other words, the apertures 63 and 64 may be disposed in other portions of the vehicle body cover 8 excluding the front surface section 34.

The first blades may not include the aforementioned recesses 43b and 43c. Similarly, the second blades may not include the recesses.

The positions of the first top surface openings 54a to 54d are not particularly limited to the aforementioned configurations. However, the forefront first top surface opening 54a is required to be positioned rearwards of the front end of the forefront first blade 42a of the plural first blades 42a to 42c. Similarly, the forefront first top surface opening 54a is required to be positioned rearwards of the front end of the forefront second blade 47a of the plural second blades 47a to 47c. Alternatively, the forefront first top surface opening 54a is required to be positioned rearwards of the outlet of the forefront air path 44a of the plural air paths 44a and 44b.

In the aforementioned exemplary embodiment, the entire openings of the first, second and third opening portions 51, 52 and 53 are disposed over the engine 11 (see FIG. 3). However, only a portion of the openings of the first, second and third opening portions 51, 52 and 53 may be disposed over the engine 11. Further, another member may be disposed between the engine 11 and the openings of the first, second and third opening portions 51, 52 and 53.

In the aforementioned exemplary embodiment, the right and left lateral surface sections 33 and 32 partially covers the both lateral sides of the engine 11. However, the right and left lateral surface sections 33 and 32 may entirely cover the both lateral sides of the engine 11.

In the aforementioned exemplary embodiment, the grill component 40, including the first blades 42b and 42c and the slanted surfaces 41b and 41c, is produced as an individual component separated from the remaining portion of the top surface section 31. However, the first blades 42b and 42c and the slanted surfaces 41b and 41c may be integrally formed with the main body of the top surface section 31, similarly to the other first blade 42a and the other slanted surface 41a.

### <Industrial Applicability>

The present invention has an advantageous effect of enhancing a ventilation performance in the inner space enclosed by the vehicle body cover. Therefore, the present invention is useful as an invention for a saddle-ride type vehicle.

### REFERENCE SIGNS LIST

- 1: Saddle-ride type vehicle
- 2: Front wheel
- 3: Rear wheel
- 4: Drive Unit
- 24: Front fork
- 26: Handle
- 6: Steering unit
- 21: Head pipe
- 22: Main frame (frame unit)
- 7: Seat
- 31: Top surface section
- 32: Left lateral surface section
- 33: Right lateral surface section
- 8: Vehicle body cover
- 54a-54d: First top surface opening (opening)
- 63, 64: Aperture
- 42a: First blade
- 47a: Second blade
- 55a: Top surface protruded portion (protruded portion)
- 41a: Slanted surface
- 15: Radiator

## Claims

1. A saddle-ride type vehicle (1), comprising:
a drive unit (4);
a frame unit (22) disposed over the drive unit (4);
a seat (7); and
a vehicle body cover (8) including: a top surface section (31) disposed in front of the seat (7) for covering a top side of the frame unit (22), the top surface section (31) including a first blade (42a) and a second blade (47a), the first and second blades (42a, 47a) disposed away from each other in a transverse direction of the vehicle (1); and a lateral surface section (32, 33) at least partially covering a lateral side of the drive unit (4),
wherein the top surface section (31) includes a top surface center portion (37) which is disposed in the center of the top surface section (31) in the transverse direction of the vehicle,
the first blade (42a) is slanted with respect to a longitudinal direction of the vehicle (1) for positioning a transversely outward end thereof forwards of a transversely inward end thereof,
the second blade (47a) is slanted with respect to the longitudinal direction of the vehicle (1) for positioning a transversely outward end thereof forwards of a transversely inward end thereof,
**characterized in that**
an opening (54a-54d) is positioned in the transverse center of the top surface center portion (37), at least partially disposed above the drive unit (4) and communicating with an inner space enclosed by the vehicle body cover (8),
the opening (54a-54d) is disposed between the first blade (42a) and the second blade (47a) in the transverse direction of the vehicle (1), the opening (54a-54d) is disposed rearwards of a front end of the first blade (42a) and a front end of the second blade (47a), and
the first blade (42a) and the second blade (47a) are configured to guide the air flowing outward of the vehicle body cover (8) towards the opening (54a-54d).

2. The saddle-ride type vehicle (1) according to claim 1, wherein the top surface section (31) includes a protruded portion (55a) protruded upwards therefrom for covering the opening (54a-54d) from behind.

3. The saddle-ride type vehicle (1) according to claim 2, wherein the protruded portion (55a) is slanted for positioning a top portion thereof forwards of a bottom portion thereof.

4. The saddle-ride type vehicle (1) according to any of the previous claims,
wherein the top surface section (31) further includes a slanted surface (41a) aligned with either the first blade (42a) or the second blade (47a) in the longitudinal direction of the vehicle (1), and
the slanted surface (41a) is slanted with respect to the longitudinal direction of the vehicle (1) for positioning a transversely outward end thereof forwards of a transversely inward end thereof.

5. The saddle-ride type vehicle (1) according to any of the previous claims, wherein the
vehicle body cover (8) includes an aperture (63, 64) in a portion thereof positioned forwards of
the opening (54a-54d), the aperture (63, 64) opened in a forward direction of the vehicle body, the aperture (63, 64) communicating with the inner space enclosed by the vehicle body cover (8).

6. The saddle-ride type vehicle (1) according to claim 5,
wherein the vehicle body cover (8) has a maximum transverse dimension in a position rearward of the aperture (63, 64), and
the lateral surface section (32, 33) includes a slanted portion positioned rearwards of the position in which the vehicle body cover (8) has the maximum transverse dimension, the slanted portion slanted for positioning a rear portion thereof to be closer to a transverse center than a front portion thereof to be.

7. The saddle-ride type vehicle (1) according to any of the previous claims, wherein either the first blade (42a) or the second blade (47a) is hollowed out for producing a space communicating with the inner space enclosed by the vehicle body cover (8).

8. The saddle-ride type vehicle (1) according to any of the previous claims, further comprising:
a radiator (15) disposed inwards of the vehicle body cover (8), the radiator (15) configured to execute heat exchange between an outside air and a refrigerant for cooling the drive unit (4).

9. The saddle-ride type vehicle (1) according to any of the previous claims, further comprising:
a front wheel (2);
a rear wheel (3);
a steering unit (6) including: a front fork (24) supporting the front wheel (2) for allowing the front wheel (2) to rotate; and a handle (26) coupled to a top of the front fork (24); and
a head pipe (21) supporting the front fork (24) for allowing the front fork (24) to rotate;
wherein the drive unit (4) is disposed between the front wheel (2) and the rear wheel (3);
the frame unit (22) is connected to the head pipe (21);
the seat (7) is disposed rearwards of the steering unit (6); and
the top surface section (31) of the vehicle body cover (8) is disposed between the steering unit (6) and the seat (7).

## Patentansprüche

1. Ein Sattelfahrzeugtyp (1) aufweisend:
eine Antriebseinheit (4),
eine Rahmeneinheit (22) die über der Antriebseinheit (4) vorgesehen ist,
ein Sitz (7), und
eine Fahrzeugkörperabdeckung (8), beinhaltend:
eine Oberflächensektion (31), die vor dem Sitz (7) zum Abdecken einer Oberseite der Rahmeneinheit (22) vorgesehen ist, die Oberflächensektion (31) beinhaltet ein erstes Blatt (42a) und ein zweites Blatt (47a), das erste und das zweite Blatt (42a, 47a) sind voneinander weg in einer Querrichtung des Fahrzeugs (1) vorgesehen, und eine längsseitige Oberflächensektion (32, 33) deckt zumindest teilweise eine Längsseite der Antriebseinheit (4) ab,
wobei die Oberflächensektion (31) einen Deckflächenzentrumsabschnitt (37) beinhaltet, der in dem Zentrum der Oberflächensektion (31) in der Querrichtung des Fahrzeugs vorgesehen ist,
das erste Blatt (42a) ist in Bezug zu einer Längsrichtung des Fahrzeugs (1) geneigt zum Positionieren eines querliegenden äußeren Endes davon vorderhalb von einem querliegenden inneren Ende davon,
das zweite Blatt (47a) ist in Bezug zu der Längsrichtung des Fahrzeugs (1) geneigt zum Positionieren eines querliegenden äußeren Endes davon vorderhalb von einem querliegenden inneren Ende davon,
**dadurch gekennzeichnet, dass**
eine Öffnung (54a bis 54d) in dem Querzentrum des Deckflächenzentrumsabschnitts (37) positioniert ist, und zumindest teilweise über der Antriebseinheit (4) vorgesehen ist und die mit einem inneren Raum kommuniziert, der von der Fahrzeugkörperabdeckung (8) umschlossen ist,
die Öffnung (54a-54d) ist zwischen dem ersten Blatt (42a) und dem zweiten Blatt (47a) in der Querrichtung des Fahrzeugs (1) vorgesehen und die Öffnung (54a-54d) ist hinter einem vorderen Ende des ersten Blatts (42a) und eines vorderen Endes des zweiten Blatts (47a) vorgesehen, und
das erste Blatt (42a) und das zweite Blatt (47a) sind konfiguriert, um außerhalb der Fahrzeugkörperabdeckung (8) fließende Luft zur Öffnung (54a-54d) hin zu leiten.

2. Der Sattelfahrzeugtyp (1) gemäß Anspruch 1, wobei die Oberflächensektion (31) einen vorstehenden Abschnitt (55a) beinhaltet, der nach oben davon vorsteht zum Abdecken der Öffnung (54a-54d) von hinten.

3. Der Sattelfahrzeugtyp (1) gemäß Anspruch 2, wobei der vorstehende Abschnitt (55a) geneigt ist, um einen oberen Abschnitt davon vorwärts zu positionieren von einem unteren Abschnitt davon.

4. Der Sattelfahrzeugtyp (1) gemäß einem der vorherigen Ansprüche, wobei die Oberflächensektion (31) weiter eine geneigte Oberfläche (41a) beinhaltet, die ausgerichtet ist mit entweder dem ersten Blatt (42a) oder dem zweiten Blatt (47a) in der Längsrichtung des Fahrzeugs (1), und die geneigte Oberfläche (41 a) ist in Bezug zu der Längsrichtung des Fahrzeugs (1) geneigt zum Positionieren eines querliegenden äußeren Endes davon vorderhalb von einem querliegenden inneren Ende davon.

5. Der Sattelfahrzeugtyp (1) gemäß einem der vorherigen Ansprüche, wobei die Fahrzeugkörperabdeckung (8) eine Öffnung (63, 64) in einem Abschnitt beinhaltet, der vorwärts vor der Öffnung (54a-54d) positioniert ist, wobei die Öffnung (63, 64) in einer Vorwärtsrichtung des Fahrzeugkörpers öffnet, und die Öffnung (63, 64) mit dem inneren Raum, der durch die Fahrzeugkörperabdeckung (8) umschlossen ist, kommuniziert.

6. Der Sattelfahrzeugtyp (1) gemäß Anspruch 5, wobei die Fahrzeugkörperabdeckung (8) ein maximales Querabmaß in einer Position hinter der Öffnung (63, 64) aufweist, und
die längsseitige Oberflächensektion (32, 33) einen geneigten Abschnitt beinhaltet, der hinter der Position, bei der die Fahrzeugkörperabdeckung (8) das maximale Querabmaß hat positioniert ist, der geneigte Abschnitt ist geneigt, um einen hinteren Abschnitt davon näher an einem Querzentrum zu positionieren als einen vorderen Abschnitt davon.

7. Der Sattelfahrzeugtyp (1) gemäß einem der vorherigen Ansprüche, wobei entweder das erste Blatt (42a) oder das zweite Blatt (47a) ausgehöhlt ist zum Produzieren eines Raums, der mit dem inneren Raum der von der Fahrzeugkörperabdeckung (8) umschlossen ist, kommuniziert.

8. Der Sattelfahrzeugtyp (1) gemäß einem der vorherigen Ansprüche, weiter aufweisend:
einen Lüfter (15), der innerhalb der Fahrzeugkörperabdeckung (8) positioniert ist, der Lüfter (15) ist konfiguriert, um einen Wärmeaustausch zwischen einer äußeren Luft und einem Kühlmittel zum Kühlen der Antriebseinheit (4) auszuüben.

9. Der Sattelfahrzeugtyp (1) gemäß einem der vorherigen Ansprüche, weiter aufweisend:
ein Vorderrad (2),
ein Hinterrad (3),
eine Lenkeinheit (6) beinhaltend:
eine Vordergabel (24), die das Vorderrad (2) unterstützt und gestattet, dass sich das Vorderrad (2) dreht, und einen Lenker (26), der mit einer Oberseite der Vordergabel (24) verbunden ist, und ein Steuerrohr (21) das die Vordergabel (24) unterstützt, um zu gestatten, dass die Vordergabel (24) sich dreht, wobei die Antriebseinheit (4) zwischen dem Vorderrad (2) und dem Hinterrad (3) vorgesehen ist und die Rahmeneinheit (22) mit dem Steuerrohr (21) verbunden ist, der Sitz (7) ist hinter der Lenkeinheit (6) vorgesehen, und die Oberflächensektion (31) der Fahrzeugkörperabdeckung (8) ist zwischen der Lenkeinheit (6) und dem Sitz (7) vorgesehen.

## Revendications

1. Véhicule de type à selle (1) comprenant :
une unité d'entraînement (4) ;
une unité de châssis (22) agencée par-dessus l'unité d'entraînement (4) ;
un siège (7) ; et
un carénage du corps de véhicule (8) comportant : une section de surface supérieure (31) agencée devant le siège (7) pour recouvrir un côté supérieur de l'unité de châssis (22), la section de surface supérieure (31) comportant une première lame (42a) et une deuxième lame (47a), les première et deuxième lames (42a, 47a) étant espacées entre elles en direction transversale du véhicule (1) ; et une section de surface latérale (32, 33) recouvrant au moins partiellement un côté latéral de l'unité d'entraînement (4),
dans lequel la section de surface supérieure (31) comprend une portion centrale de surface supérieure (37) qui est agencée au centre de la section de surface supérieure (31) en direction transversale du véhicule,
la première lame (42a) est inclinée par rapport à une direction longitudinale du véhicule (1) pour positionner une extrémité transversalement externe correspondante à l'avant d'une extrémité transversalement interne correspondante,
la deuxième lame (47a) est inclinée par rapport à la direction longitudinale du véhicule (1) pour positionner une extrémité transversalement externe correspondante à l'avant d'une extrémité transversalement interne correspondante,
**caractérisé en ce que**
une ouverture (54a-54d) est positionnée au centre transversal de la portion centrale de surface supérieure (37), au moins partiellement agencée au-dessus de l'unité d'entraînement (4) et communiquant avec un espace interne enfermé par le carénage du corps de véhicule (8),
l'ouverture (54a-54d) est agencée entre la première lame (42a) et la deuxième lame (47a) en direction transversale du véhicule (1),
l'ouverture (54a-54d) est agencée à l'arrière d'une extrémité avant de la première lame (42a) et d'une extrémité avant de la deuxième lame (47a), et
la première lame (42a) et la deuxième lame (47a) sont configurées pour guider l'air qui s'écoule vers l'extérieur du carénage du corps de véhicule (8) vers l'ouverture (54a-54d).

2. Véhicule de type à selle (1) selon la revendication 1, dans lequel la section de surface supérieure (31) comprend une portion en saillie (55a) qui ressort vers le haut de celle-ci pour recouvrir l'ouverture (54a-54d) depuis l'arrière.

3. Véhicule de type à selle (1) selon la revendication 2, dans lequel la portion en saillie (55a) est inclinée pour positionner une portion supérieure correspondante à l'avant d'une portion inférieure correspondante.

4. Véhicule de type à selle (1) selon l'une quelconque des revendications précédentes, dans lequel
la section de surface supérieure (31) comprend en outre une surface inclinée (41a) alignée avec soit la première lame (42a), soit la deuxième lame (47a), en direction longitudinale du véhicule (1), et
la surface inclinée (41a) est inclinée par rapport à la direction longitudinale du véhicule (1) pour positionner une extrémité transversalement externe correspondante à l'avant d'une extrémité transversalement interne correspondante.

5. Véhicule de type à selle (1) selon l'une quelconque des revendications précédentes, dans lequel le carénage du corps de véhicule (8) comprend une ouverture (63, 64) dans une portion de celui-ci positionnée à l'avant de l'ouverture (54a-54d), l'ouverture (63, 64) étant ouverte en direction d'avancement du corps du véhicule, l'ouverture (63, 64) communiquant avec l'espace interne enfermé par le carénage du corps de véhicule (8).

6. Véhicule de type à selle (1) selon la revendication 5, dans lequel
le carénage du corps de véhicule (8) présente une dimension transversale maximale dans une position à l'arrière de l'ouverture (63, 64), et
la section de surface latérale (32, 33) comprend une portion inclinée positionnée à l'arrière de la position dans laquelle le carénage du corps de véhicule (8) présente la dimension transversale maximale, la portion inclinée étant inclinée pour positionner une portion arrière correspondante de façon à ce qu'elle soit plus proche d'un centre transversal qu'une portion avant correspondante.

7. Véhicule de type à selle (1) selon l'une quelconque des revendications précédentes, dans lequel soit la première lame (42a), soit la deuxième lame (47a) est creuse pour produire un espace qui communique avec l'espace interne enfermé par le carénage du corps de véhicule (8).

8. Véhicule de type à selle (1) selon l'une quelconque des revendications précédentes, comprenant en outre :
un radiateur (15) agencé vers l'intérieur du carénage du corps de véhicule (8), le radiateur (15) étant configuré pour mettre en oeuvre un échange de chaleur entre de l'air extérieur et un frigorigène pour refroidir l'unité d'entraînement (4).

9. Véhicule de type à selle (1) selon l'une quelconque des revendications précédentes, comprenant en outre :
une roue avant (2) ;
une roue arrière (3) ;
une unité de direction (6) comprenant : une fourche avant (24) qui supporte la roue avant (2) pour permettre à la roue avant (2) de tourner ; et un guidon (26) couplé à une partie supérieure de la fourche avant (24) ; et
un tube de tête (21) qui supporte la fourche avant (24) pour permettre à la fourche avant (24) de tourner ;
dans lequel
l'unité d'entraînement (4) est agencée entre la roue avant (2) et la roue arrière (3) ;
l'unité de châssis (22) est connectée au tube de tête (21) ;
le siège (7) est agencé à l'arrière de l'unité de direction (6) ; et
la section de surface supérieure (31) du carénage du corps de véhicule (8) est agencée entre l'unité de direction (6) et le siège (7).
